# FASCICULE DE BREVET EUROPEEN

(11) **EP 0 435 764 B1**
(45) Date de publication et mention de la délivrance du brevet: **15.02.1995**
(21) Numéro de dépôt: 90403753.8
(22) Date de dépôt: 24.12.1990
(51) Int. Cl.: G05D 1/00, B64C 13/16, G05D 1/06

(54) **Système pour diminuer les efforts appliqués à la voilure et notamment à l'emplanture des ailes d'un aéronef en vol**
Verfahren zur Verminderung der Flügelspannung, insbesondere bei Mastfussbefestigung des Flügels eines fliegenden Flugzeugs
System to lower the stresses applied to a wing, especially at the mast-base connection of the wings from a flying aircraft

(30) Priorité: 28.12.1989 FR 8917341
(43) Date de publication de la demande: 03.07.1991
(73) Titulaire: AEROSPATIALE Société Nationale Industrielle, 75781 Paris Cédex 16 (FR)
(72) Inventeur: Fabre, Pierre, F-31300 Toulouse (FR); Lacoste, Philippe, F-31000 Toulouse (FR); Le Tron, Xavier, F-31000 Toulouse (FR)
(74) Mandataire: Bonnetat, Christian

(56) Documents cités:
- EP-A- 0 213 760
- WO-A-87/02964
- US-A- 4 562 546
- US-A- 4 725 020
- US-A- 4 787 042
- US-A- 4 796 192
- US-A- 4 821 981
- US-A- 4 821 982
- JOURNAL OF AIRCRAFT. vol. 26, no. 4, 26 avril 1989, NEW YORK US pages 322 -327; Y.Matsuzaki: "Gust Load Alleviation of a Transport-Type Wing:Test and Analysis"

## Description

La présente invention concerne un système pour diminuer les efforts appliqués à la voilure et notamment à l'emplanture des ailes d'un aéronef en vol.

Lorsqu'un aéronef effectue une manoeuvre, comme une ressource, ou lorsqu'il subit une rafale de vent, cela entraîne une augmentation de la portance, et donc des efforts appliqués à la voilure et notamment à l'emplanture des ailes. Une manoeuvre comme la ressource, ou une rafale de vent, se traduit par une accélération verticale de l'aéronef que l'on peut mesurer à l'aide d'accéléromètres. On dénomme "facteur de charge vertical" la mesure de cette accélération. Pour un facteur de charge donné, diminuer les efforts appliqués à la voilure et notamment à l'emplanture des ailes ne peut être obtenu qu'en rapprochant le point d'application de la portance de l'emplanture de l'aile, et cela grâce au braquage vers le haut d'ailerons prévus au voisinage de l'extrémité libre de chaque aile.

On connaît déjà, par le document US-A-3 347 498, un système pour diminuer les efforts appliqués à l'emplanture des ailes d'un aéronef, aussi bien lorsque ce dernier effectue des manoeuvres que lorsqu'il subit des rafales de vent, comprenant des accéléromètres disposés sur le fuselage et aux extrémités des ailes de l'aéronef, et des moyens de commande pour piloter l'angle de braquage d'ailerons, prévus au voisinage des extrémités libres des ailes, proportionnellement à l'accélération verticale de l'aéronef mesurée par lesdits accéléromètres.

Un tel système est activé quelle que soit l'accélération verticale à laquelle est soumis l'aéronef, et cela de façon proportionnelle à ladite accélération. Les plus petites accélérations sont donc répercutées sur l'angle de braquage des ailerons, ce qui peut entraîner des perturbations du régime de vol et sollicite les vérins d'actionnement des ailerons de façon répétitive et souvent superflue. La présente invention a pour but d'éviter ces inconvénients.

A cet effet, le système pour diminuer les efforts appliqués à la voilure et notamment à l'emplanture des ailes d'un aéronef en vol, du type comportant des moyens de détection et de mesure de l'accélération verticale de l'aéronef, et des moyens pour fournir des signaux de commande de surfaces aérodynamiques liées aux ailes de l'aéronef, lesdits moyens de commande pilotant l'angle de braquage desdites surfaces aérodynamiques en fonction des signaux d'accélération qu'ils reçoivent, est remarquable, selon l'invention, en ce que lesdits moyens de commande ne sont activés que lorsque ladite accélération verticale γ dépasse un seuil prédéterminé γs.

Ainsi, un signal de commande non nul pour le braquage desdites surface aérodynamiques n'est effectivement appliqué auxdites surfaces que lorsque l'accélération verticale γ dépasse un seuil prédéterminé. En d'autres termes, le système de l'invention n'est effectivement mis en oeuvre que lorsque les efforts sur la voilure et notamment à l'emplanture des ailes de l'aéronef sont susceptibles d'atteindre une valeur critique, en mettant en danger l'intégrité de la structure de la voilure, et cela que l'aéronef effectue une manoeuvre ou qu'il subisse une rafale de vent, de faibles accélérations sans risque pour cette même structure n'étant pas prises en compte.

De préférence, au-dessus dudit seuil γs, les signaux de commande de l'angle de braquage desdites surface aérodynamiques sont proportionnels à γ - γs.

Dans le cas où le système de l'invention est plus particulièrement adapté pour diminuer les efforts appliqués à la voilure et notamment à l'emplanture des ailes de l'aéronef lorsque ce dernier effectue une manoeuvre comme une ressource et que ledit aéronef est un avion civil gros-porteur, ledit seuil d'accélération γs est sensiblement égal à 2 g.

Avantageusement, le signal de commande varie linéairement entre 0 et 1 lorsque l'accélération γ varie entre ledit seuil γs et l'accélération maximale permise γ max. En particulier, l'accélération maximale permise γ max est sensiblement égale à 2,5 g.

Selon une autre caractéristique de l'invention, lesdits signaux de commande sont utilisés également pour piloter les gouvernes de profondeur de l'aéronef pour contrer le moment de tangage créé par le braquage desdites surfaces aérodynamiques.

Selon encore une autre caractéristique de l'invention, l'angle de braquage desdites surfaces aérodynamiques et, le cas échéant, des gouvernes de profondeur est obtenu en multipliant le signal de commande par un facteur constant qui dépend de la nature desdites surfaces.

Selon une autre caractéristique de l'invention, le signal de commande actuel est immédiatement appliqué aux surfaces aérodynamiques lorsque, au-dessus dudit seuil γs, l'accélération verticale γ croît.

De préférence, lorsque l'accélération verticale γ décroît en restant au-dessus dudit seuil γs, le signal de commande actuel n'est effectivement appliqué aux surfaces aérodynamiques que lorsque l'écart entre le signal en vigueur précédemment appliqué aux surfaces aérodynamiques et le signal actuel atteint un seuil prédéterminé. En particulier, le signal de commande pouvant varier entre 0 et 1, ledit seuil d'écart est sensiblement égal à 0,2.

Par ailleurs, le signal de commande actuel est immédiatement appliqué aux surfaces aérodynamiques lorsque ledit signal de commande est, dans l'absolu, inférieur à une valeur prédéterminée. Plus particulièrement, le signal de commande pouvant varier entre 0 et 1, ladite valeur est sensiblement égale à 0,1.

Selon une autre caractéristique de l'invention, lesdits moyens de commande comprennent des moyens de calcul du signal de commande proprement dit et des moyens pour traduire ce signal en un angle de braquage desdites surfaces aérodynamiques.

Avantageusement, lesdits moyens de calcul du signal de commande comprennent une table d'interpolation linéaire reliée auxdits moyens de détection et de mesure de l'accélération verticale de l'aéronef.

En outre, lesdits moyens de calcul comprennent une première porte logique ET, aux trois entrées de laquelle sont fournies les informations suivantes :
- l'aéronef est en vol ou non,
- l'aéronef est en configuration lisse ou non, et
- le manche à balai est braqué au-dessus d'un seuil angulaire prédéterminé ou non,

et dont la sortie commande un premier commutateur, dont les deux entrées sont reliées, respectivement, à un générateur de référence de valeur nulle et à la sortie de ladite table d'interpolation linéaire.

Selon une autre caractéristique de l'invention, lesdits moyens de calcul comprennent un premier comparateur destiné à comparer le signal de commande actuel et le signal de commande en vigueur précédemment appliqué aux surfaces aérodynamiques.

De préférence, lesdits moyens de calcul comprennent un deuxième comparateur destiné à comparer le signal de commande actuel additionné d'une valeur donnée et le signal de commande en vigueur.

Avantageusement, lesdits moyens de calcul comprennent un troisième comparateur destiné à comparer le signal de commande actuel à une valeur de référence prédéterminée.

En particulier, la sortie de la première porte logique ET et les sorties des premier, deuxième et troisième comparateurs sont reliées aux entrées respectives d'une seconde porte logique ET dont la sortie est reliée à une mémoire, cette dernière étant également reliée à la sortie du premier commutateur.

Par ailleurs, la sortie du premier comparateur commande un second commutateur aux deux entrées desquels sont reliés des générateurs de référence respectifs et dont la sortie est reliée à un dispositif de limitation de la vitesse de variation du signal de commande, relié à la sortie de ladite mémoire.

Les figures du dessin annexé feront bien comprendre comment l'invention peut être réalisée.

La figure 1 illustre schématiquement le système de l'invention.

La figure 2 est un diagramme bloc des moyens de commande du système de la figure 1.

La figure 3 est un schéma logique d'un exemple de réalisation des moyens de calcul du signal de commande lorsque l'aéronef effectue une manoeuvre.

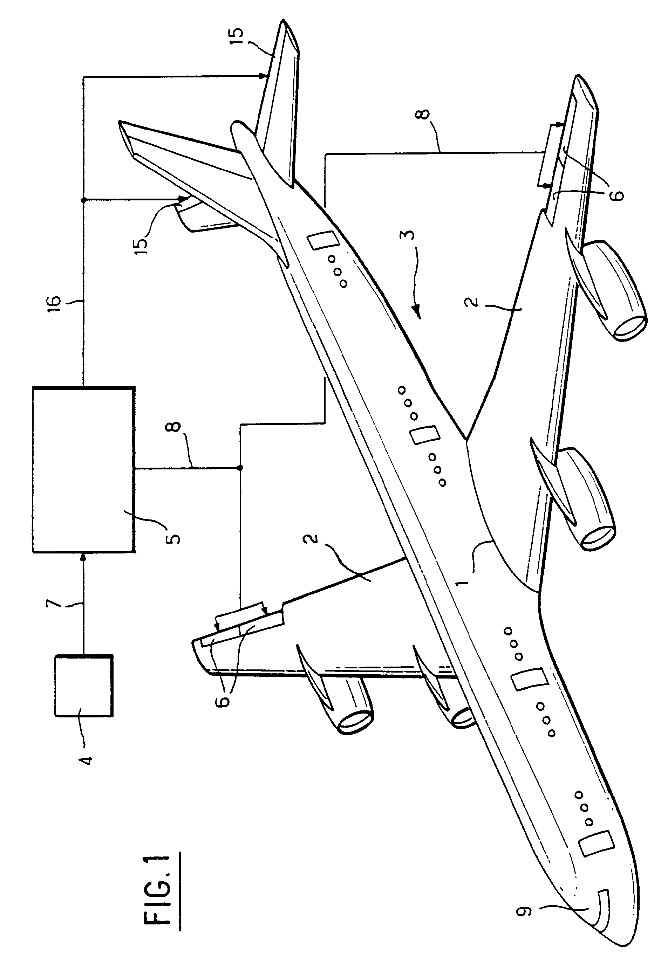

Le système selon l'invention permet de diminuer les efforts appliqués à la voilure et notamment à l'emplanture 1 des ailes 2 d'un aéronef en vol, notamment un avion civil gros-porteur 3 comme représenté. En se référant à la figure 1, le système de l'invention comporte des moyens 4 de détection et de mesure de l'accélération verticale de l'aéronef, et des moyens 5 pour fournir des signaux de commande de surfaces aérodynamiques, comme des ailerons 6, liées aux ailes 2 de l'aéronef 3 au voisinage des extrémités libres de celles-ci, ces moyens de commande 5 pilotant l'angle de braquage des surfaces aérodynamiques 6 en fonction des signaux d'accélération qu'ils reçoivent des moyens de détection et de mesure 4 par une liaison 7. A cet effet, les moyens de commande 5 sont reliés par des liaisons 8 aux moyens d'actionnement respectifs (non représentés) des ailerons 6. On notera que les moyens de détection et de mesure 4 comprennent un ou des accéléromètres qui, dans la réalité, sont avantageusement implantés à l'avant de l'aéronef, c'est-à-dire au niveau du poste de pilotage 9.

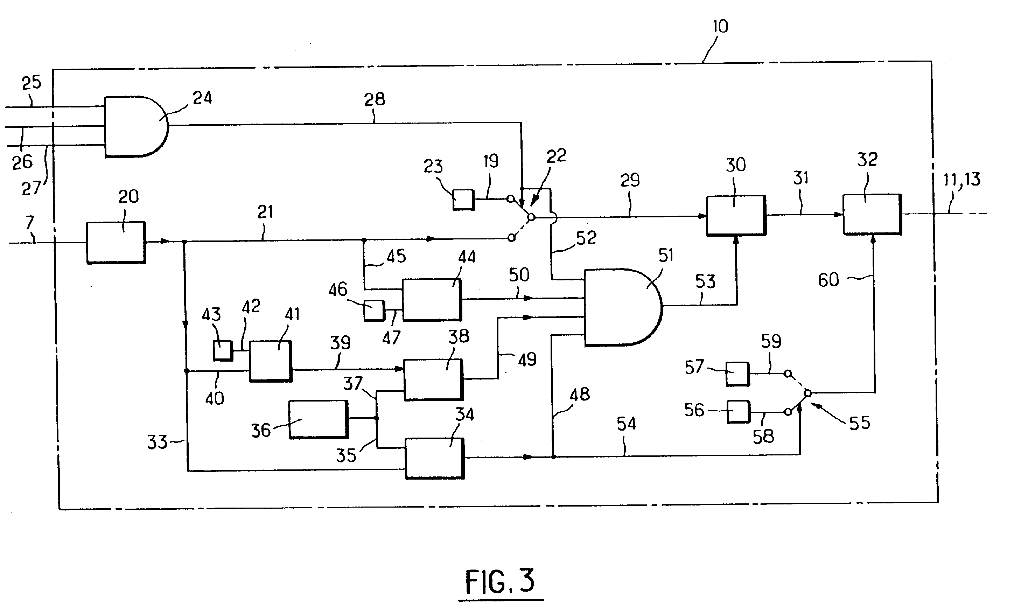

Plus particulièrement, les moyens de commande 5 ne sont activés que lorsque l'accélération verticale γ de l'aéronef dépasse un seuil prédéterminé γs, comme on le verra en détail en référence à la figure 3.

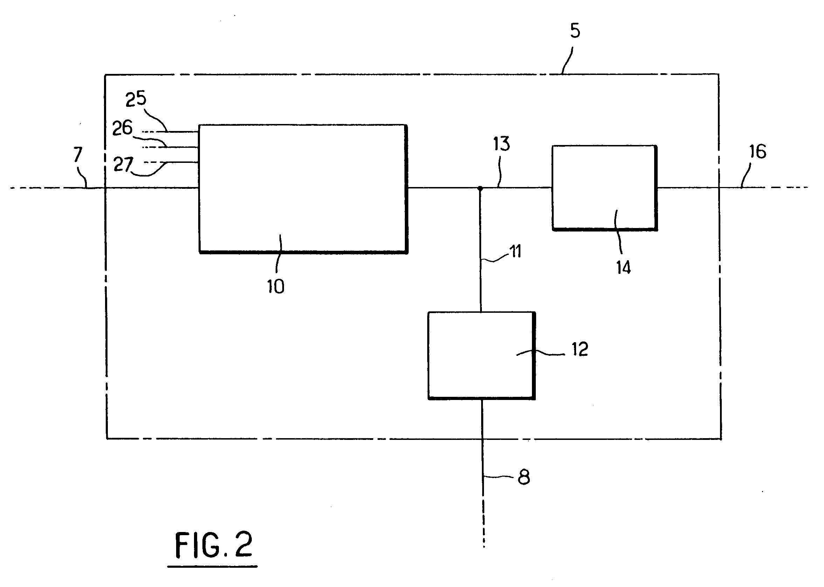

En se référant à la figure 2, les moyens de commande 5 comportent des moyens de calcul 10 du signal de commande proprement dit reliés, d'une part, par une liaison 11, à des moyens 12 pour traduire ce signal en un angle de braquage des ailerons 6 et, d'autre part, par une liaison 13, à des moyens 14 pour traduire ce signal en un angle de braquage des gouvernes de profondeur 15, reliées aux moyens de commande 5 par des liaisons 16, de façon à contrer le moment de tangage créé par le braquage des ailerons 6.

L'angle de braquage des ailerons 6 et des gouvernes de profondeur 15 sera obtenu en multipliant le signal de commande par un facteur constant qui dépend de la nature des surfaces aérodynamiques (ailerons, gouvernes de profondeur ou autres) en question. A ce propos, en plus des ailerons 6, on peut également "jouer" sur les déporteurs ("spoilers"), non représentés sur la figure 1, pour renforcer l'effet d'allègement des efforts sur l'emplanture des ailes de l'aéronef.

Le principe de l'invention, c'est-à-dire l'activation des moyens de commande 5 des surfaces aérodynamiques 6 à partir d'un seuil prédéterminé d'accélération, est applicable aussi bien lorsque l'aéronef subit une rafale de vent que lorsqu'il effectue une manoeuvre comme une ressource. A titre illustratif, on décrira en détail ci-après, en référence à la figure 3, les moyens de calcul 10 du signal de commande proprement dit, lorsque l'aéronef effectue une manoeuvre.

Le signal d'accélération, acheminé par la liaison 7, est fourni à l'entrée d'une table d'interpolation linéaire 20. Celle-ci est conçue de façon qu'elle délivre un signal de commande qui reste nul tant que le facteur de charge (accélération verticale) est inférieur ou égal au seuil prédéterminé, par exemple égal à 2 g, et qui est interpolé linéairement entre 0 et 1 pour toute autre valeur du facteur de charge comprise entre 2 et 2,5 g, cette dernière valeur correspondant au facteur de charge maximal autorisé par les lois du pilotage pour un avion civil gros-porteur.

Le signal de commande, provenant de la table d'interpolation linéaire 20, est acheminé, par la liaison 21, à une première entrée d'un commutateur 22 qui bascule de la position montrée en traits pleins sur le dessin, dans laquelle la sortie du commutateur 22 est reliée à un générateur de référence de valeur nulle 23, relié à la seconde entrée du commutateur 22 par la liaison 19, à la position montrée en traits interrompus, dans laquelle le signal de commande peut être transmis en traversant ledit commutateur, si les trois conditions suivantes sont remplies :
1/ l'aéronef doit être en vol ; cette information est fournie à une première entrée d'une première porte logique ET 24 par l'intermédiaire de la liaison 25 ; et
2/ l'aéronef doit être en configuration lisse (becs de bord d'attaque et volets hypersustentateurs rentrés) ; cette information est fournie à une deuxième entrée de la porte logique ET 24 par l'intermédiaire de la liaison 26 ; et
3/ le manche à balai ou le manche latéral est braqué au-dessus d'un seuil angulaire prédéterminé pour confirmer la manoeuvre (par exemple 8° dans le sens à cabrer) ; cette information est fournie à la troisième entrée de la porte logique ET 24 par l'intermédiaire de la liaison 27. La sortie de la porte logique ET 24 est alors au niveau logique 1, entraînant le basculement du commutateur 22 de la position montrée en traits pleins à la position montrée en traits interrompus.

La sortie de la porte ET 24 est reliée au commutateur 22 qu'elle commande par la liaison 28. A son tour, le commutateur 22 est relié, par une liaison 29, à une mémoire 30, dont la fonction sera explicitée par la suite, elle-même reliée à un dispositif 32 de limitation de la vitesse de variation du signal de commande, dont la sortie est reliée, par les liaisons 11 et 13, aux moyens 12 et 14 pour traduire ce signal de commande en un angle de braquage des ailerons 6 ou des gouvernes de profondeur 15 (figures 1 et 2).

Si le facteur de charge γ augmente, en étant déjà supérieur audit seuil γs, les signaux de commande de l'angle de braquage des surfaces aérodynamiques 6 seront proportionnels à γ - γs (avec γ max = 2,5 g). Toutefois, si le facteur de charge diminue, en restant toujours supérieur au seuil γs, le signal de commande effectivement appliqué aux surfaces aérodynamiques ne diminuera qu'après confirmation de cette tendance, afin de ne pas nuire à la stabilité de l'aéronef. Pour cela, on crée un effet d'hystérésis de la façon décrite ci-après.

Le signal le commande, provenant de la table d'interpolation linéaire 20, est acheminé, par la liaison 33, à une entrée d'un premier comparateur 34 dont l'autre entrée reçoit, par la liaison 35, le signal en vigueur précédemment appliqué aux ailerons 6, avec un certain retard défini par le dispositif 36. Le comparateur 34 est tel que, lorsque le facteur de charge diminue, c'est-à-dire que le signal en vigueur est supérieur au signal de commande actuel, sa sortie est au niveau logique 1. Par signal actuel, on entend le signal qui vient d'être reçu par les moyens de calcul 10 et calculé dans la table d'interpolation linéaire 20.

Le signal provenant du dispositif 36 est également fourni à une entrée d'un deuxième comparateur 38, par la liaison 37, dont l'autre entrée reçoit, par la liaison 39, le signal issu de la table d'interpolation linéaire 20 par la liaison 40, additionné d'une valeur donnée, par exemple égale à 0,2, dans le sommateur 41. Pour cela, la seconde entrée du sommateur 41 est reliée, par une liaison 42, à un générateur 43 de cette référence, par exemple 0,2. La sortie du comparateur 38 est au niveau logique 1 si le signal fourni par la liaison 39 est supérieur à celui fourni par la liaison 37, c'est-à-dire si l'écart entre le signal en vigueur et le signal actuel est inférieur à ladite valeur donnée, par exemple 0,2; ce qui traduit l'attente de la confirmation de tendance précédemment indiquée.

De plus, dans un troisième comparateur 44, le signal provenant de la table d'interpolation linéaire 20 par la liaison 45 est comparé à une valeur donnée, par exemple 0, 1, fournie à la seconde entrée du comparateur 44 par un générateur de référence 46 relié à celle-ci par la liaison 47. La sortie du comparateur 44 est au niveau logique 1 si ledit signal est supérieur à ladite valeur de référence.

Les signaux de sortie des comparateurs 34, 38 et 44 sont acheminés, par les liaisons respectives 48, 49 et 50, à trois entrées d'une seconde porte logique ET 51, dont la quatrième entrée est reliée, par la liaison 52, à la sortie de la première porte logique ET 24, et dont la sortie est reliée, par la liaison 53, à la mémoire 30.

Dans le cas où la sortie de la porte logique ET 51 est au niveau logique 1, c'est-à-dire que les quatre entrées de ladite porte sont au niveau 1, la mémoire 30 est "figée", ce qui signifie que la valeur précédemment déterminée au signal de commande ("signal de commande en vigueur") est conservée. Plus précisément, cela se produit si et seulement si les conditions suivantes sont respectées :
1/ le facteur de charge diminue (comparateur 34),
2/ cette diminution est inférieure à un certain seuil (comparateur 38),
3/ le signal est supérieur à une valeur donnée (comparateur 44), et, bien évidemment,
4/ l'aéronef est en vol, en configuration lisse et le manche à balai (ou manche latéral) est braqué au-delà d'un certain seuil angulaire (la sortie de la porte ET 24 est au niveau logique 1).

En revanche, si l'une de ces quatre conditions (ou groupe de conditions en ce qui concerne l'alinéa 4) n'est pas respectée, la sortie de la porte ET 51 passe alors au niveau logique 0 et la mémoire 30 devient "transparente", c'est-à-dire qu'elle laisse passer le signal de commande actuel, transmis par la liaison 29. Cela se produit lorsque :
- la tendance est à l'augmentation du facteur de charge, ou
- le facteur de charge diminuant, l'écart entre signal en vigueur et signal actuel est supérieur ou égal à, par exemple, 0,2, ou
- le signal de commande est, dans l'absolu, inférieur à, par exemple, 0,1.

On notera que, dans le cas où la sortie de la porte logique ET 24 est au niveau logique 0, la mémoire "transparente" laisse passer la valeur de référence nulle (générateur 23) en tant que "signal de commande".

Par ailleurs, la sortie du comparateur 34 est également reliée, par la liaison 54, à un second commutateur 55 qui peut basculer de la position, montrée en traits pleins sur la figure 3, lorsque ladite sortie est au niveau logique 0, à la position montrée en traits interrompus lorsque la sortie du comparateur 34 passe au niveau logique 1. La première position correspond à une vitesse de variation du signal de commande, lorsque le facteur de charge croît, plus grande que celle correspondant à la seconde position, lorsque le facteur de charge décroît. Dans le premier cas, la vitesse de variation peut être de 0,5/s et, dans le second cas, de 0,1/s. Ces informations sont transmises, respectivement, à partir des générateurs de référence 56 et 57 reliés au commutateur 55 par les liaisons 58 et 59. En outre, le commutateur 55 est relié au dispositif 32 de limitation de la vitesse de variation du signal de commande par une liaison 60.

Cela permet d'agir sur la vitesse de variation du signal de commande selon le sens de variation de celui-ci : une vitesse faible lorque ce signal a tendance à diminuer permet de réduire les perturbations sur le mouvement de l'aéronef tout en conservant un niveau suffisant d'allègement des efforts.

Ainsi, le système selon l'invention permet, d'une part, de diminuer les efforts appliqués à la voilure et notamment à l'emplanture des ailes d'un aéronef lorsque ceux-ci risquent d'atteindre une valeur critique, c'est-à-dire lorsque l'accélération verticale de l'aéronef dépasse un seuil prédéterminé, mais en ne tenant pas compte de "petites" accélérations sans risque pour l'intégrité de la structure de la voilure, et, d'autre part, de créer un effet d'hystérésis grâce auquel, lorsque l'accélération verticale diminue tout en restant supérieure audit seuil, l'angle de braquage des surfaces aérodynamiques n'évoluera dans ce sens qu'après confirmation de cette tendance, cela afin de ne pas nuire à la stabilité de l'aéronef. Bien entendu, le principe de l'invention est applicable aussi bien lorsque l'aéronef effectue une manoeuvre que lorsqu'il subit une rafale de vent.

## Revendications

1. Système pour diminuer les efforts appliqués à la voilure et notamment à l'emplanture des ailes d'un aéronef en vol, du type comportant des moyens de détection et de mesure de l'accélération verticale de l'aéronef, et des moyens pour fournir des signaux de commande de surfaces aérodynamiques liées aux ailes de l'aéronef, lesdits moyens de commande pilotant l'angle de braquage desdites surfaces aérodynamiques en fonction des signaux d'accélération qu'ils reçoivent,
caractérisé en ce que lesdits moyens de commande (5) ne sont activés que lorsque ladite accélération verticale γ dépasse un seuil prédéterminé γs.

2. Système selon la revendication 1,
caractérisé en ce que, au-dessus dudit seuil γs, les signaux de commande de l'angle de braquage desdites surfaces aérodynamiques (6) sont proportionnels à γ-γs.

3. Système selon la revendication 1 ou la revendication 2, adapté pour diminuer les efforts appliqués à la voilure et notamment à l'emplanture des ailes de l'aéronef lorsque ce dernier effectue une manoeuvre comme une ressource, ledit aéronef étant un avion civil gros-porteur,
caractérisé en ce que ledit seuil d'accélération γs est sensiblement égal à 2 g.

4. Système selon la revendication 3,
caractérisé en ce que le signal de commande varie linéairement entre 0 et 1 lorsque l'accélération γ varie entre ledit seuil γs et l'accélération maximale permise γmax.

5. Système selon la revendication 4,
caractérisé en ce que l'accélération maximale permise γmax est sensiblement égale à 2,5 g.

6. Système selon l'une quelconque des revendications 1 à 5,
caractérisé en ce que lesdits signaux de commande sont utilisés également pour piloter les gouvernes de profondeur (15) de l'aéronef pour contrer le moment de tangage créé par le braquage desdites surfaces aérodynamiques (6).

7. Système selon l'une quelconque des revendications 1 à 6,
caractérisé en ce que l'angle de braquage desdites surfaces aérodynamiques (6) et, le cas échéant, des gouvernes de profondeur (15) est obtenu en multipliant le signal de commande par un facteur constant qui dépend de la nature desdites surfaces.

8. Système selon l'une quelconque des revendications 1 à 7,
caractérisé en ce que le signal de commande actuel est immédiatement appliqué aux surfaces aérodynamiques lorsque, au-dessus dudit seuil γs, l'accélération verticale γ croît.

9. Système selon l'une quelconque des revendications 1 à 8,
caractérisé en ce que, lorsque l'accélération verticale décroît en restant au-dessus dudit seuil γs, le signal de commande actuel n'est effectivement appliqué aux surfaces aérodynamiques (6) que lorsque l'écart entre le signal en vigueur précédemment appliqué aux surfaces a érodynamiques et le signal actuel atteint un seuil prédéterminé.

10. Système selon la revendication 9,
caractérisé en ce que, le signal de commande pouvant varier entre 0 et 1, ledit seuil d'écart est sensiblement égal à 0,2.

11. Système selon l'une quelconque des revendications 1 à 10,
caractérisé en ce que le signal de commande actuel est immédiatement appliqué aux surfaces aérodynamiques (6) lorsque ledit signal de commande est, dans l'absolu, inférieur à une valeur prédéterminée.

12. Système selon la revendication 11,
caractérisé en ce que, le signal de commande pouvant varier entre 0 et 1, ladite valeur est sensiblement égale à 0,1.

13. Système selon l'une quelconque des revendications 1 à 12,
caractérisé en ce que lesdits moyens de commande (5) comprennent des moyens de calcul (10) du signal de commande proprement dit et des moyens (12, 14) pour traduire ce signal en un angle de braquage desdites surfaces aérodynamiques (6).

14. Système selon la revendication 13,
caractérisé en ce que lesdits moyens de calcul (10) du signal de commande comprennent une table d'interpolation linéaire (20) reliée auxdits moyens de détection et de mesure (4) de l'accélération verticale de l'aéronef.

15. Système selon la revendication 14,
caractérisé en ce que lesdits moyens de calcul (10) comprennent une première porte logique ET (24), aux trois entrées de laquelle sont fournies les informations suivantes :
- l'aéronef est en vol ou non,
- l'aéronef est en configuration lisse ou non, et
- le manche à balai est braqué au-dessus d'un seuil angulaire prédéterminé ou non, et dont la sortie commande un premier commutateur (22), dont les deux entrées sont reliées, respectivement, à un générateur de référence de valeur nulle (23) et à la sortie de ladite table d'interpolation linéaire (20).

16. Système selon la revendication 14 ou la revendication 15,
caractérisé en ce que lesdits moyens de calcul (10) comprennent un premier comparateur (34) destiné à comparer le signal de commande actuel et le signal de commande en vigueur précédemment appliqué aux surfaces aérodynamiques.

17. Système selon la revendication 16,
caractérisé en ce que lesdits moyens de calcul (10) comprennent un deuxième comparateur (38) destiné à comparer le signal de commande actuel additionné d'une valeur donnée et le signal de commande en vigueur.

18. Système selon la revendication 17,
caractérisé en ce que lesdits moyens de calcul (10) comprennent un troisième comparateur (44) destiné à comparer le signal de commande actuel à une valeur de référence prédéterminée.

19. Système selon la revendication 18,
caractérisé en ce que la sortie de la première porte logique ET (24) et les sorties des premier (34), deuxième (38) et troisième (44) comparateurs sont reliées aux entrées respectives d'une seconde porte logique ET (51) dont la sortie est reliée à une mémoire (30), cette dernière étant également reliée à la sortie du premier commutateur (22).

20. Système selon la revendication 19,
caractérisé en ce que la sortie du premier comparateur (34) commande un second commutateur (55) aux deux entrées desquels sont reliés des générateurs de référence respectifs (56, 57) et dont la sortie est reliée à un dispositif (32) de limitation de la vitesse de variation du signal de commande, relié à la sortie de ladite mémoire (30).

## Patentansprüche

1. System zur Verringerung der Kräfte am Tragwerk und vor allem an der Tragflügelwurzel eines Luftfahrzeugs während des Fluges, derart, daß es Mittel zur Erfassung und Messung der vertikalen Beschleunigung des Luftfahrzeugs und Mittel zur Abgabe von Signalen zur Steuerung aerodynamischer Flächen, die mit den Tragflügeln des Luftfahrzeugs verbunden sind, umaßt, wobei durch die Steuermittel der Ausschlagwinkel der aerodynamischen Flächen in Abhängigkeit von den erhaltenen Beschleunigungssignalen gesteuert wird, dadurch gekennzeichnet, daß die Steuermittel (5) erst aktiviert werden, wenn die vertikale Beschleunigung γ eine vorgegebene Schwelle γs überschreitet.

2. System nach Anspruch 1,
dadurch gekennzeichnet, daß die Steuersignale des Ausschlagwinkels der aerodynamischen Flächen (6) oberhalb der Schwelle γs proportional γ - γs sind.

3. System nach Anspruch 1 oder Anspruch 2, vorgesehen zur Verringerung der Kräfte am Tragwerk und vor allem an der Tragflügelwurzel des Luftfahrzeugs, wenn dieses ein Flugmanöver, wie ein Abfangmanöver ausführt, wobei das Luftfahrzeug ein ziviles Großraumflugzeug ist,
dadurch gekennzeichnet, daß die Beschleunigungsschwelle γs etwa gleich 2 g ist.

4. System nach Anspruch 3,
dadurch gekennzeichnet, daß sich das Steuersignal linear zwischen 0 und 1 ändert, wenn sich die Beschleunigung γ zwischen der Schwelle γs und der größtzulässigen Beschleunigung γmax ändert.

5. System nach Anspruch 4,
dadurch gekennzeichnet, daß die größtzulässige Beschleunigung γmax etwa gleich 2,5 g ist.

6. System nach einem der Ansprüche 1 bis 5,
dadurch gekennzeichnet, daß die Steuersignale auch zur Steuerung der Höhenruder (15) des Luftfahrzeugs genutzt werden, um dem durch den Ausschlag der aerodynamischen Flächen (6) entstandenen Nickmoment entgegenzuwirken.

7. System nach einem der Ansprüche 1 bis 6,
dadurch gekennzeichnet, daß der Ausschlagwinkel der aerodynamischen Flächen (6) und gegebenenfalls der Höhenruder (15) durch Multiplikation des Steuersignals mit einem konstanten Faktor erzielt wird, der von der Art der Flächen abhängig ist.

8. System nach einem der Ansprüche 1 bis 7,
dadurch gekennzeichnet, daß das aktuelle Steuersignal unverzüglich den aerodynamischen Flächen aufgegeben wird, wenn die vertikale Beschleunigung γ oberhalb der Schwelle γs zunimmt.

9. System nach einem der Ansprüche 1 bis 8,
dadurch gekennzeichnet, daß das aktuelle Steuersignal bei abnehmender vertikaler Beschleunigung, die jedoch oberhalb der Schwelle γs verbleibt, den aerodynamischen Flächen (6) tatsächlich erst dann aufgegeben wird, wenn die Abweichung zwischen dem gültigen, zuvor an die aerodynamischen Flächen angelegten Signal und dem aktuellen Signal eine vorbestimmte Schwelle erreicht.

10. System nach Anspruch 9,
dadurch gekennzeichnet, daß bei einer Änderung des Steuersignals zwischen 0 und 1 die Abweichungsschwelle etwa gleich 0,2 ist.

11. System nach einem der Ansprüche 1 bis 10,
dadurch gekennzeichnet, daß das aktuelle Steuersignal unverzüglich an die aerodynamischen Flächen (6) angelegt wird, wenn das Steuersignal absolut kleiner als ein vorbestimmter Wert ist.

12. System nach Anspruch 11,
dadurch gekennzeichnet, daß bei einer Änderung des Steuersignals zwischen 0 und 1 der Wert etwa gleich 0,1 ist.

13. System nach einem der Ansprüche 1 bis 12,
dadurch gekennzeichnet, daß die Steuermittel (5) Rechenmittel (10) für das eigentliche Steuersignal und Mittel (12,14) zur Umsetzung dieses Signals in einen Ausschlagwinkel der aerodynamischen Flächen (6) enthalten.

14. System nach Anspruch 13,
dadurch gekennzeichnet, daß die Rechenmittel (10) für das Steuersignal eine lineare Interpolationstabelle (20) enthalten, die mit den Erfassungs- und Meßmitteln (4) der vertikalen Beschleunigung des Luftfahrzeugs verbunden ist.

15. System nach Anspruch 14,
dadurch gekennzeichnet, daß die Rechenmittel (10) eine erste logische UND-Schaltung (24) enthalten, an deren drei Eingänge folgende Informationen gegeben werden:
- Ausführung des Flugbetriebs durch das Luftfahrzeug,
- Rein-Konfiguration des Luftfahrzeugs und
- Einschlag des Steuerknüppels oberhalb einer vorbestimmten Winkelschwelle, und deren Ausgang einen ersten Schalter (22) steuert, dessen beide Eingänge jeweils mit einem Nullwert-Referenzgenerator (23) und mit dem Ausgang der linearen Interpolationstabelle (20) verbunden sind.

16. System nach Anspruch 14 oder Anspruch 15,
dadurch gekennzeichnet, daß die Rechenmittel (10) einen ersten Komparator (34) enthalten, der das aktuelle Steuersignal mit dem gültigen, zuvor an die aerodynamischen Flächen angelegten Steuersignal vergleicht.

17. System nach Anspruch 16,
dadurch gekennzeichnet, daß die Rechenmittel (10) einen zweiten Komparator (38) enthalten, der das um einen gegebenen Wert erhöhte aktuelle Steuersignal mit dem gültigen Steuersignal vergleicht.

18. System nach Anspruch 17,
dadurch gekennzeichnet, daß die Rechenmittel (10) einen dritten Komparator (44) enthalten, um das aktuelle Steuersignal mit einem vorbestimmten Referenzwert zu vergleichen.

19. System nach Anspruch 18,
dadurch gekennzeichnet, daß der Ausgang der ersten logischen UND-Schaltung (24) und die Ausgänge des ersten (34), zweiten (38) und dritten (44) Komparators mit den entsprechenden Eingängen einer zweiten logischen UND-Schaltung (51) verbunden sind, deren Ausgang mit einem Speicher (30) verbunden ist, der seinerseits mit dem Ausgang des ersten Schalters (22) verbunden ist.

20. System nach Anspruch 19,
dadurch gekennzeichnet, daß der Ausgang des ersten Komparators (34) einen zweiten Schalter (55) steuert, an dessen beide Eingänge entsprechende Referenzgeneratoren (56,57) angeschlossen sind und dessen Ausgang mit einer Vorrichtung (32) zur Begrenzung der Änderungsgeschwindigkeit des Steuersignals verbunden ist, die ihrerseits mit dem Ausgang von Speicher (30) verbunden ist.

## Claims

1. System for reducing the forces applied to the wings and particularly to the wing roots of an aircraft in flight, of the type comprising means of detecting and measuring the vertical acceleration of the aircraft, and means of supplying control signals for the aerodynamic surfaces connected to the wings of the aircraft, the said means of control controlling the deflection angle of the said aerodynamic surfaces according to the acceleration signals that they receive, characterized in that the said means of control (5) are activated only when the said vertical acceleration γ exceeds a predetermined threshold γ s.

2. System according to Claim 1, characterized in that, above the said threshold γ s, the control signals for the deflection angle of the said aerodynamic surfaces (6) are proportional to γ - γ s.

3. System according to Claim 1 or Claim 2, adapted to reduce the forces applied to the wings and particularly to the wing roots of the aircraft when the latter carries out a manoeuvre such as a pull-up, the said aircraft being a civil transport aircraft, characterized in that the said acceleration threshold γ s is substantially equal to 2 g.

4. System according to Claim 3, characterized in that the control signal varies linearly between 0 and 1 when the acceleration γ varies between the said threshold γ s and the maximum permitted acceleration γ max.

5. System according to Claim 4, characterized in that the maximum permitted acceleration γ max is substantially equal to 2.5 g.

6. System according to any one of Claims 1 to 5, characterized in that the said control signals are also used for controlling the elevators (15) of the aircraft in order to counter the pitching moment created by the deflection of the said aerodynamic surfaces (6).

7. System according to any one of Claims 1 to 6, characterized in that the deflection angle of the said aerodynamic surfaces (6) and, if applicable, the elevators (15) is obtained by multiplying the control signal by a constant factor which depends on the nature of the said surfaces.

8. System according to any one of Claims 1 to 7, characterized in that the present control signal is immediately applied to the aerodynamic surfaces when, above the said threshold γ s, the vertical acceleration γ increases.

9. System according to any one of Claims 1 to 8, characterized in that, when the vertical acceleration decreases whilst remaining above the said threshold γ s, the present control signal is in fact applied to the aerodynamic surfaces (6) only when the difference between the prevailing signal previously applied to the aerodynamic surfaces and the present signal reaches a predetermined threshold.

10. System according to Claim 9, characterized in that, the control signal being able to vary between 0 and 1, the said difference threshold is substantially equal to 0.2.

11. System according to any one of Claims 1 to 10, characterized in that the present control signal is immediately applied to the aerodynamic surfaces (6) when the said control signal is, in absolute terms, less than a predetermined value.

12. System according to Claim 11, characterized in that, the control signal being able to vary between 0 and 1, the said value is substantially equal to 0.1.

13. System according to any one of Claims 1 to 12, characterized in that the said control means (5) comprise means (10) of computing the actual control signal and means (12, 14) for converting this signal into a deflection angle of the said aerodynamic surfaces (6).

14. System according to Claim 13, characterized in that the said means (10) of computing the control signal comprise a linear interpolation table (20) connected to the said means (4) of detecting and measuring the vertical acceleration of the aircraft.

15. System according to Claim 14, characterized in that the said computing means (10) comprise a first logic AND gate (24) to the three inputs of which are supplied the following information items:
- the aircraft is or is not in flight,
- the aircraft is or is not in smooth configuration, and
- the joystick is or is not deflected above a predetermined angular threshold, and whose output controls a first switch (22), whose two inputs are respectively connected to a zero value reference generator (23) and to the output of the said linear interpolation table (20).

16. System according to Claim 14 or Claim 15, characterized in that the said computing means (10) comprise a first comparator (34) intended to compare the present control signal and the prevailing control signal previously applied to the aerodynamic surfaces.

17. System according to Claim 16, characterized in that the said computing means (10) comprise a second comparator (38) intended to compare the present control signal increased by a given value with the prevailing control signal.

18. System according to Claim 17, characterized in that the said computing means (10) comprise a third comparator (44) intended to compare the present control signal with a predetermined reference value.

19. System according to Claim 18, characterized in that the output of the first logic AND gate (24) and the outputs of the first (34), second (38) and third (44) comparators are connected to the respective inputs of a second logic AND gate (51) whose output is connected to a memory (30), the latter also being connected to the output of the first switch (22).

20. System according to Claim 19, characterized in that the output of the first comparator (34) controls a second switch (55) at whose two inputs are connected to respective reference generators (56, 57) and whose output is connected to a device (32) for limiting the speed of variation of the control signal, connected to the output of the said memory (30).
